# EUROPÄISCHE PATENTSCHRIFT

(11) **EP 0 724 010 B1**
(45) Veröffentlichungstag und Bekanntmachung des Hinweises auf die Patenterteilung: **10.03.1999**
(21) Anmeldenummer: 96100341.5
(22) Anmeldetag: 11.01.1996
(51) Int. Cl.: C10K 1/04, C10J 3/72, C10J 3/82, F16L 58/00

(54) **Vorrichtung zum Ableiten eines heissen, Kohlenmonoxid enthaltenden Gasgemisches**
Device for diverting a carbon monoxide containing hot gas stream
Installation d'évacuation d'un courant de gaz chaud contenant du monoxyde de carbone

(30) Priorität: 28.01.1995 DE 19502788
(43) Veröffentlichungstag der Anmeldung: 31.07.1996
(73) Patentinhaber: Metallgesellschaft Aktiengesellschaft, 60325 Frankfurt am Main (DE)
(72) Erfinder: Röll, Werner, D-63607 Wächtersbach (DE); Hohmann, Friedrich W., D-63225 Langen (DE)

(56) Entgegenhaltungen:
- EP-A- 0 004 401
- EP-A- 0 258 907
- DE-A- 3 809 313
- DE-C- 4 327 176

## Beschreibung

Die Erfindung betrifft eine Heißgasleitung zum Ableiten eines Kohlenmonoxid enthaltenden Gasgemisches, das eine Temperatur von 500 bis 1500°C hat, wobei die Heißgasleitung ein äußeres Mantelrohr, ein inneres, in Abschnitte unterteiltes Schutzrohr und zwischen dem Schutzrohr und dem Mantelrohr eine poröse Schutzschicht aus thermisch isolierender Schutzmasse aufweist.

Heiße, kohlenmonoxidhaltige Gasgemische, die für das Verfahren und die Vorrichtung in Frage kommen, sind z.B. rohe Synthesegase mit den Hauptkomponenten Wasserstoff und Kohlenmonoxid. Diese Gase können z.B. durch die Spaltung von Erdgas, durch die Vergasung flüssiger Kohlenwasserstoffe oder auch durch die Kohlevergasung gewonnen werden. Geeignete Verfahren und Reaktoren hierfür sind in Ullmann's Encyclopedia of Industrial Chemistry, 5. Auflage, Band A 12, Seiten 192 bis 208, beschrieben. Hierzu gehört auch der Röhrenofen, von welchem Einzelheiten aus DE-C-43 27 176 bekannt sind. In diesem Patent ist beschrieben, den Bereich der Auslaßenden der Röhren außerhalb des Ofens gegen Korrosion durch Carbidbildung zu schützen. In diesem Zweck wird ein weitgehend CO-freies, gas- und dampfförmiges Schutzmedium dem gefährdeten Bereich zugeführt.

Die das CO-haltige Gasgemisch führende Heißgasleitung weist ein in Abschnitte unterteiltes Schutzrohr auf, damit die Längenänderungen des Schutzrohres aufgrund von Temperaturänderungen ungehindert verlaufen können und nicht zu Verbiegungen oder zur Zerstörung des Schutzrohrs führen. Das Schutzrohr kann deshalb nicht völlig gasdicht ausgebildet werden, es muß vielmehr eine Stoßfuge zwischen zwei Rohrabschnitten erhalten bleiben, damit sich die Rohrabschnitte bei Temperaturerhöhung verlängern können.

Durch die Stoßfugen zwischen den Schutzrohr-Abschnitten können kleine Seitenströme des heißen, CO-haltigen Gases nach außen durch die Schutzmasse hindurch bis zur Innenseite des Mantelrohres vordringen.

Bei längerer Betriebszeit kann dies zu unerwünschten überhitzten Stellen am Mantelrohr führen. Ferner greift das Kohlenmonoxid das üblicherweise aus Stahl gefertigte Mantelrohr an und führt durch Carbidbildung (metal dusting) zur Schwächung des Rohrs und möglicherweise zu dessen Zerstörung. Die thermisch isolierende Schutzmasse, z.B. handelsübliche Stampfmasse oder eine an sich bekannte feuerfeste Auskleidung, ist porös. Deshalb kann das heiße, CO-haltige Gasgemisch zumindest durch Diffusion bis an die Innenseite des Mantelrohrs gelangen.

Das heiße, CO-haltige Gasgemisch, das in der Heißgasleitung strömt, weist Temperaturen von mindestens 500°C und zumeist Temperaturen im Bereich von 600 bis 1500°C auf. Üblicherweise beträgt der CO-Gehalt im Gasgemisch mindestens 5 Vol.%. Beim Zusammentreffen von Metall, insbesondere Stahl, und Kohlenmonoxid muß mit der Reaktion 2 CO → CO₂ + C gerechnet werden, wobei das C-Atom als Radikal wirkt und im Metall zur Carbidbildung führt. Diese Carbidbildung, die auch als metal-dusting-Korrosion bezeichnet wird, erfolgt vor allem im Temperaturbereich von 500 bis 850°C.

Der Erfindung liegt die Aufgabe zugrunde, bei der Heißgasleitung dafür zu sorgen, daß Metallteile der Heißgasleitung nicht durch Carbidbildung angegriffen und überhitzte Stellen vermieden werden. Erfindungsgemäß geschieht dies durch die im Patentanspruch genannte Merkmalskombination. Bei dem weitgehend CO-freien Schutzmedium, das man in die Ringkammern in der Schutzschicht leitet, kann es sich z.B. um Wasserdampf, Wasserstoff, Stickstoff, Kohlendioxid oder Gemische mehrerer dieser Stoffe handeln. Das Schutzmedium füllt die Hohlräume im Bereich zwischen dem Mantelrohr und dem Schutzrohr, so daß das CO-haltige heiße Gas weitgehend ferngehalten wird. Wichtig sind in der Heißgasleitung auch die Metallringe, die eine gasdichte Verbindung zwischen den Schutzrohr-Abschnitten und dem Mantelrohr herstellen. Auch diese Verbindungsteile werden gegen den Korrosionsangriff durch metal dusting geschützt.

Ausgestaltungsmöglichkeiten der Heißgasleitung werden mit Hilfe der Zeichnung erläutert.

Es zeigt:
- Fig. 1: in schematischer Darstellung die Heißgasleitung zwischen zwei Reaktoren und
- Fig. 2: einen Längsschnitt durch ein vergrößertes Stück der Heißgasleitung.

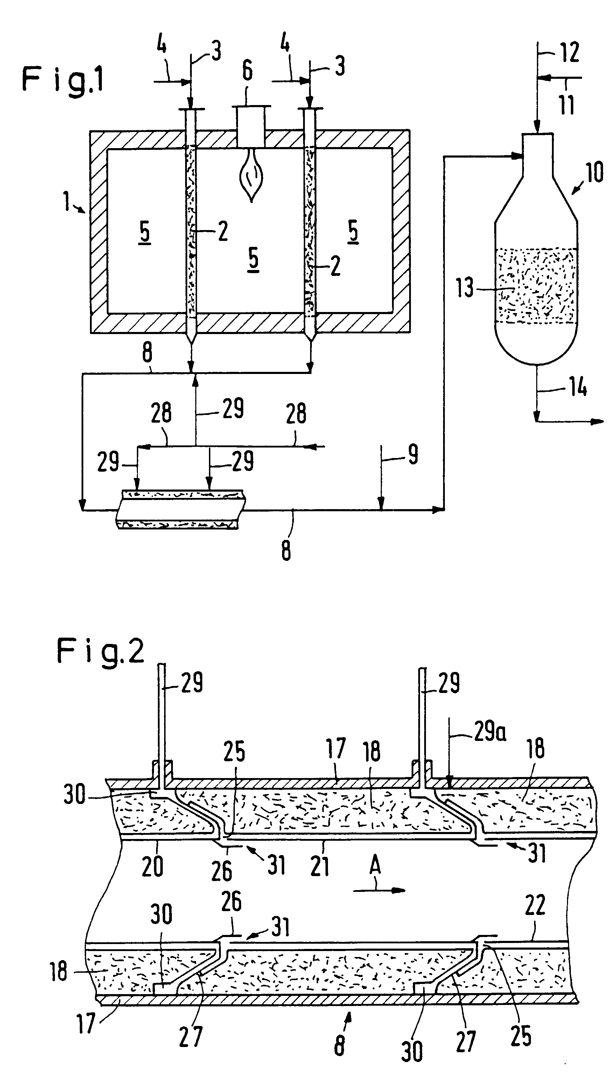

Fig. 1 zeigt eine von mehreren Möglichkeiten des Einsatzes von Heißgasleitungen, welche ein CO-haltiges Gas führen. In einem Röhrenofen (1), der zahlreiche, mit körnigem Katalysator (z.B. Nickelkatalysator) gefüllte Röhren (2) aufweist, wird Erdgas aus der Leitung (3) zusammen mit Wasserdampf aus der Leitung (4) zu einem an H₂ und CO reichen Spaltgas bei Temperaturen im Bereich von etwa 700 bis 1000°C umgesetzt. Die Röhren (2) befinden sich in einem von heißem Verbrennungsgas durchströmten Feuerraum (5), der zahlreiche Brenner (6) aufweist, von denen in Fig. 1 nur einer dargestellt ist. Den Brennern (6) führt man in nicht dargestellter, an sich bekannter Weise Brennstoff, z.B. Erdgas, und Luft zu.

In den Röhren (2) entsteht ein heißes Produktgas, das reich an Wasserstoff und Kohlenmonoxid ist. Dieses Produktgas, das die Röhren (2) nach unten verläßt, besteht üblicherweise zu mindestens 40 Vol.-% aus der Summe der Komponenten H₂ und CO. Das Produktgas wird in der Heißgasleitung (8) gesammelt und einem autothermen Spaltreakt.or (10) zugeführt. Zuvor kann man dem Produktgas durch die Leitung (9) noch Erdgas zuführen.

Die Umsetzung im Reaktor (10) erfolgt unter Zugabe von Sauerstoff durch die Leitung (11) und Wasserdampf durch die Leitung (12) an einer Schüttung (13) eines körnigen Katalysators, bei dem es sich ebenfalls um einen Nickelkatalysator handeln kann. Rohes Synthesegas, das eine Temperatur im Bereich von 800 bis 1300°C aufweist, wird in der zweiten Heißgasleitung (14) abgezogen und z.B. einer Ammoniak- oder Methanolsyntheseanlage zugeführt. Abweichend von Fig. 1 kann man rohes Synthesegas durch Vergasung kohlenstoffhaltiger Materialien in bekannter Weise durch partielle Oxidation auch ohne Verwendung eines Katalysators erzeugen.

In Fig. 1 ist schematisch angedeutet, daß man der Heißgasleitung (8) an mehreren Stellen durch Stichleitungen (29), die von einer Hauptleitung (28) ausgehen, ein weitgehend CO-freies, gas- oder dampfförmiges Schutzmedium, z.B. Wasserdampf, zuführt. Einzelheiten der Heißgasleitung (8), die prinzipiell auch für die zweite Heißgasleitung (14) gelten, werden mit Hilfe der Fig. 2 erläutert. Die Hauptteile der Heißgasleitung sind das Mantelrohr (17), die thermisch isolierende Schutzmasse (18) und das sich aus mehreren Abschnitten (20), (21) und (22) zusammensetzende Schutzrohr. Zwischen benachbarten Abschnitten besteht ein Abstand in Form einer Stoßfuge (25). Im Bereich der Stoßfugen (25) ist jeder Abschnitt durch einen konischen Metallring (27) mit dem Mantelrohr (17), z.B. durch Verschweißen, verbunden. Da der Metallring (27) und seine Verbindungen gasdicht sind, bildet er eine Gassperre zwischen dem Mantelrohr und dem Schutzrohr. Im Bereich der Stoßfugen (25) gibt es jeweils ein die Enden der Rohrabschnitte überdeckendes Rohrstück (26), das jeweils mit dem stromaufwärts befindlichen Abschnitt verschweißt ist. Die Strömungsrichtung des CO-haltigen Gasgemisches ist durch den Pfeil (A) bezeichnet.

Das gas- oder dampfförmige Schutzmedium strömt durch die Stichleitungen (29) und tritt zunächst in eine Ringkammer (30) ein, die in der Schutzmasse (18) ausgespart ist. Von hier aus kann das Schutzmedium in beliebiger Weise durch die poröse Schutzmasse (18) diffundieren und dabei Hohlräume im Bereich zwischen dem zugehörigen Schutzrohr-Abschnitt (20) oder (21) und dem Mantelrohr (17) teilweise oder ganz ausfüllen. Da besonders auch die Metallringe (27) durch metal-dusting-Korrosion gefährdet sind, legt man die Zufuhrstellen für das Schutzmedium in die Nähe dieser Metallringe (27), wie das durch die Einmündungen der Stichleitungen (29) und die Lage der Ringkammern (30) in Fig. 2 dargestellt ist. Falls es sich empfiehlt, Schutzmedium auf beide Seiten eines Metallrings (27) zuzuführen, kann dies durch eine weitere Stichleitung (29a) geschehen, vgl. Fig. 2.

Das durch eine Stichleitung (29) unter geeignetem Überdruck zunächst in die Ringkammer (30) geleitete Schutzmedium verteilt sich im Bereich zwischen dem inneren Schutzrohr und dem Mantelrohr (17) und tritt schließlich durch die nächstgelegene Stoßfuge (25) und den Ringspalt (31) aus. Im CO-haltigen Gasgemisch wird das ausgetretene Schutzmedium mitgeführt.

## Patentansprüche

1. Heißgasleitung zum Ableiten eines Kohlenmonoxid enthaltenden Gasgemisches, das eine Temperatur von 500 bis 1500°C hat, wobei die Heißgasleitung ein äußeres Mantelrohr (17) ein inneres, in Abschnitte (20, 21, 22) unterteiltes Schutzrohr und zwischen dem Mantelrohr und dem Schutzrohr eine poröse Schutzschicht (18) aus thermisch isolierender Schutzmasse aufweist, wobei zwischen benachbarten Schutzrohr-Abschnitten eine Stoßfuge (25) besteht und die Abschnitte im Bereich einer Stoßfuge durch einen gasdichten konischen Metallring (27) mit dem Mantelrohr gasdicht verbunden sind, wobei Ringkammern (30) in der Schutzschicht in der Nähe der Metallringe ausgebildet sind und wobei von außen durch das Mantelrohr geführte Leitungen (29) zum Zuführen von weitgehend CO-freiem, Gas- oder dampfförmigem Schutzmedium in den Ringkammern münden.

## Claims

1. A hot gas line for conducting a gas mixture containing carbon monoxide which is at a temperature of 500 to 1500°C, the hot gas line having an outer sheath tube (17), an inner protective tube divided into sections (20, 21, 22) and a porous protective layer (18) of heat-insulating protective composition between the sheath tube and the protective tube, with a butt joint (25) being present between adjoining protective tube sections and the sections being connected to the sheath tube in gastight manner in the region of a butt joint by means of a gastight conical metal ring (27), with ring chambers (30) being formed in the protective layer in the vicinity of the metal rings and lines (29) for supplying largely CO-free gaseous or vaporous protective medium which pass from the outside through the sheath tube opening into the ring chambers.

## Revendications

1. Conduite de gaz chaud pour évacuer un mélange gazeux à teneur en monoxyde de carbone, qui a une température de 500 à 1 500°C, la conduite de gaz chaud comportant un tube (17) de gainage extérieur, un tube protecteur intérieur, subdivisé en tronçons (20), (21), (22) et, entre le tube de gainage et le tube protecteur, une couche (18) protectrice poreuse en une composition protectrice isolante du point de vue thermique, un jeu de joint (25) étant prévu entre des tronçons voisins du tube protecteur et les tronçons étant, dans la zone d'un jeu de joint, reliés de manière étanche au gaz au tube de gainage par un joint (27) métallique conique étanche au gaz, des cavités (30) annulaires étant ménagées dans la couche protectrice à proximité des joints métalliques et des conduites (29), passant de l'extérieur par le tube de gainage, débouchant dans les cavités annulaires pour amener du fluide protecteur gazeux et/ou à l'état de vapeur, dans une grande mesure exempt de CO.
